# EUROPÄISCHE PATENTANMELDUNG

(11) **EP 2 159 547 A2**
(43) Veröffentlichungstag der Anmeldung: **03.03.2010**
(21) Anmeldenummer: 09009676.9
(22) Anmeldetag: 27.07.2009
(51) Int. Cl.: G01D 5/244

(54) **Sensorbaugruppe für einen Drehgeber und mit einer solchen Sensorbaugruppe ausgestatteter Drehgeber**

(30) Priorität: 30.08.2008 DE 102008045173; 08.10.2008 DE 102008050823; 13.10.2008 DE 102008051479
(71) Anmelder: Mehnert, Walter, 85521 Ottobrunn (DE); Theil, Thomas, Dr., 82340 Feldafing (DE)
(72) Erfinder: Mehnert, Walter, 85521 Ottobrunn (DE); Theil, Thomas, Dr., 82340 Feldafing (DE)
(74) Vertreter: Strasser, Wolfgang

(57) **Zusammenfassung**

Es wird eine Sensorbaugruppe (3) für einen Drehgeber beschrieben, der zum Erfassen der Drehbewegungen einer Antriebswelle (1) in beiden Richtungen dient und ein einstufiges Getriebe mit einem Eingangszahnrad (15) aufweist, das zur Antriebswelle konzentrisch angeordnet und mit dieser drehfest verbunden ist. Die Sensorbaugruppe umfasst einen absoluten Segmentzähler, der zum Zählen der von der Antriebswelle innerhalb einer jeden 360°-Drehung durchlaufenen Winkelsegmente dient und folgende Bestandteile aufweist: eine magnetische Segmentzähler-Erregeranordnung, die auf dem einen in das Eingangszahnrad eingreifenden zweiten Zahnrad (16) des Getriebes drehfest montiert ist, eine feststehende, einen Wiegand- oder Impulsdraht (28) mit aufgewickelter Induktionsspule (29) umfassende Segmentzähler-Sensoranordnung, die immer dann, wenn die magnetische Segmentzähler-Erregeranordnung vorgegebene Winkelstellungen durchläuft, elektrische Impulse abgibt, und eine Elektronikschaltung (32), die diese elektrischen Impulse zählt, den jeweils erhaltenen Zählwert speichert und aus ihm unter Berücksichtigung des Übersetzungsverhältnisses des Getriebes die momentane Winkelstellung der Antriebswelle berechnet.

## Beschreibung

Die Erfindung betrifft eine Sensorbaugruppe für einen Drehgeber der im Oberbegriff von Anspruch 1 genannten Art sowie einen Drehgeber der mit einer solchen Sensorbaugruppe ausgestattet ist.

In der vorliegenden Beschreibung wird die Welle, deren Umdrehungszahlen letztendlich erfasst und deren Winkelstellungen gemessen werden sollen, als "Antriebswelle" bezeichnet.

Ein Umdrehungszähler, bei dem immer dann, wenn die Antriebswelle eine vorgegebene Winkelstellung durchläuft, ein Zählsignal, vorzugsweise mit Drehrichtungserkennung erzeugt und vorzeichenrichtig einem Zähler zugeführt wird (Aufwärtszählung bei einer Drehrichtung, Abwärtszählung bei der entgegen gesetzten Drehrichtung), wird dann als "absolut" bezeichnet, wenn er in der Lage ist, nach einer vollständigen Unterbrechung seiner Stromversorgung, insbesondere auch nach einer Trennung von einer eventuell vorhandenen Batterie, bei Wiederherstellung der Energieversorgung den korrekten Zählwert auch dann abzugeben, wenn sich die Antriebswelle im Unterbrechungszeitraum weitergedreht hat.

Zu diesem Zweck ist es aus der EP 0 658 745 A2 bekannt, einen Teil der mechanischen Bewegungsenergie der sich drehenden Antriebswelle abzuzweigen und in einem magnetischen Zwischenspeicher so lange zu kumulieren, bis die erwähnte vorgegebene Winkelstellung erreicht ist. In dieser wird dann die gespeicherte Energie schlagartig so freigesetzt, dass aus ihr auf induktivem Weg ein elektrischer Impuls erzeugt wird, der nicht nur als Zählsignal sondern auch dazu verwendet werden kann, zumindest einen Teil der nachgeschalteten Verarbeitungselektronik so lange mit elektrischer Energie zu versorgen, bis dieser Zählimpuls vorzeichenrichtig verarbeitet und der neu entstandene Zählwert in einem nicht flüchtigen Speicher gespeichert worden ist. Letzterer kann dann bei Wiederherstellung der Energieversorgung abgefragt werden. Somit ist sichergestellt, dass die Anzahl der während eines Ausfalls der Energieversorgung von der Antriebswelle durchlaufenen Umdrehungen einwandfrei gezählt werden kann.

Bei Singleturns wird demgegenüber die aktuelle Winkelstellung der Antriebswelle durch die relative Winkellage von wenigstens zwei gegeneinander bewegbaren Körpern abgebildet, bei denen es sich beispielsweise um eine in mehreren Spuren kodierte Scheibe mit zugehörigen optischen Abtastsensoren; eine Mehrfeld-Hall-Sonde mit einem oder mehreren sich relativ zu ihr drehendem Permanentmagneten; oder zwei sich gegen eine feststehende Spulenanordnung verdrehende Magnetfluss-Leitkörper handeln kann. Eine Strom- bzw. Spannungsversorgung ist lediglich für das Auslesen der momentanen Winkellage der beiden gegeneinander bewegbaren Körper nicht aber für die von ihnen ausgeübte, rein mechanische Abbildungsfunktion erforderlich; diese läuft also auch dann weiter, wenn sich die Antriebswelle im strom- und spannungslosen Zustand dreht. so dass bei Wiederherstellung der Energieversorgung der Singleturn sofort die aktuelle Winkelstellung (innerhalb des Vollwinkels von 360°) erfassen und in ein korrektes Messsignal umsetzen kann. Ein solcher Singleturn ist somit von sich aus "absolut".

Unter einer Erregeranordnung wird der Teil eines Umdrehungszählers bzw. Singleturns verstanden, der bei seiner die Drehbewegung der Antriebswelle abbildenden Relativbewegung gegenüber dem Sensor diesen veranlasst, ein Messsignal abzugeben. Im Fall einer magnetisch arbeitenden Anordnung wird die Erregeranordnung z.B. von einem Permanentmagneten gebildet, dessen Magnetfeld die den feststehenden Sensor erregende physikalische Größe darstellt. Bei optischen Singleturns ist die "Erregeranordnung" die kodierte Scheibe deren variierende Lichttransparenz die Helligkeit des auf die Sensoranordnung auftreffenden Lichts verändert.

Unter einer Sensoranordnung wird der feststehende Teil des Umdrehungszählers und/oder Singleturns verstanden, bei dem es sich im Fall einer magnetischen Erregeranordnung z.B. um eine Mehr-Quadranten-Hallsonde und/oder einen Wiegand- oder Impulsdraht mit Induktionsspule oder im Fall einer optisch kodierten Scheibe um einen oder mehrere Phototransistoren oder dergleichen handelt.

Unter einer Sensorbaugruppe wird eine Einheit verstanden, die einen Teil eines Drehgebers bildet und ein einstufiges Getriebe mit einem Eingangszahnrad umfasst, das konzentrisch zur Antriebswelle angeordnet und mit dieser drehfest verbunden ist. Mit einem mit der Antriebswelle in Eingriff stehenden zweiten Zahnrad des einstufigen Getriebes sind dann eine oder zwei Erregeranordnungen der oben definierten Art verbunden, die mit einer oder zwei ebenfalls zur Sensorbaugruppe gehörenden Sensoranordnungen gemäß obiger Definition zusammenwirkt bzw. zusammenwirken. Vervollständigt wird eine solche Sensorbaugruppe durch eine Elektronikschaltung, welche die von der oder den Sensoranordnungen kommenden elektrischen Signale empfängt und aus ihnen die interessierenden Winkelwerte berechnet und speichert.

Eine solche Sensoranordnung ist aus der DE 195 06 938 A1 bekannt. Der dort beschriebene Drehgeber umfasst zwei solche Sensorbaugruppen, die jeweils einen Singleturn bilden. Damit eindeutige Aussagen für einen über 360° hinausgehenden Drehwinkel der Antriebswelle möglich sind, müssen sowohl das Eingangszahnrad als auch die beiden zweiten Zahnräder der beiden Sensorbaugruppen unterschiedlich Zähnezahlen aufweisen. Durch eine Art Nonius-Verfahren kann dann für einen zwar über 360° hinausgehenden, aber auf wenige Umdrehungen begrenzten Drehwinkelbereich die Winkellage der Antriebswelle bestimmt werden. Diese bekannte Anordnung ist vor allem für die Erfassung des Lenkwinkels von Kraftfahrzeugen bestimmt, bei der diese Begrenztheit des maximal erfassbaren Winkelbereiches nicht störend ist.

Nachteilig an dieser bekannten Anordnung sind unter anderem ihre Baugröße, die große Anzahl der verwendeten, genauen Komponenten.

Demgegenüber liegt der Erfindung die Aufgabe zugrunde, eine Sensorbaugruppe der im Oberbegriff von Anspruch 1 genannten Art so weiter zu bilden, dass sie es mit einem gegenüber den geschilderten Stand der Technik verringertem technischen Aufwand ermöglicht, in im obigen Sinn absoluter Weise einerseits den Drehwinkel der Antriebwelle in einzelne Segmente von jeweils weniger als 360° aufzulösen und darüber hinaus eine praktisch unbegrenzte Anzahl von vollen Umdrehungen der Antriebswelle unter Erfassung der Drehrichtung zu zählen und den jeweils erreichten Zählwert abzuspeichern. Außerdem soll eine erfindungsgemäße Sensorbaugruppe einen möglichst geringen Raumbedarf aufweisen.

Zur Lösung dieser Aufgabe sieht die Erfindung die im Anspruch 1 niedergelegten Merkmale vor.

Unter einem "Segmentzähler" wird dabei eine Vorrichtung verstanden, die beim Durchlaufen mehrerer Winkelstellungen der Antriebswelle innerhalb einer vollen Umdrehung des zugehörigen zweiten Zahnrades ein Zählsignal erzeugt. Je nach Ausbildung der Erreger- und/oder Sensoranordnung kann ein gezähltes "Segment" entweder ein Halb-, Viertel- oder Drittelkreis usw. sein, d.h. also 360°/m überdecken (m = 2, 3, 4, ...). Dabei muss m nicht notwendiger Weise eine ganze Zahl sein.

Erfindungsgemäß ist dieser Segmentzähler als absoluter Segmentzähler d.h. beispielsweise so aufgebaut, wie dies oben für einen Umdrehungszähler beschrieben wurde. Einzelheiten eines solchen Umdrehungszählers können insbesondere der DE 102 59 223 B3 und der PCT/DE2008/001305 entnommen werden, deren technische Inhalte hier mit aufgenommen werden.

Somit wird die magnetische Segmentzähler-Erregeranordnung von einem oder mehreren Permanentmagneten gebildet, die auf dem zweiten Zahnrad drehfest montiert und insbesondere so angeordnet sind, dass ihre jeweilige Magnetisierungsrichtung, d. h. die Verbindungslinie zwischen dem jeweiligen Nord- und dem zugehörigen Südpol in etwa senkrecht zu der im folgenden kurz als "Sensorachse" bezeichneten geometrischen Drehachse des zweiten Zahnrades verläuft. Die feststehende Segmentzähler-Sensoranordnung wird von einem Impuls- oder Wiegand-Draht gebildet, an dem alternierende Magnetpole vorbeilaufen müssen, damit ein jeder dieser Vorbeiläufe gezählt werden kann. Folglich werden dann, wenn nur ein solcher Permanentmagnet vorhanden ist, Segmente von jeweils 180° gezählt (n=2). Die nächst höheren möglichen Anzahlen von Permanentmagneten sind drei (n=6) bzw. fünf (n=10) usw., (also immer ungerade Zahlen) sodass in diesen Fällen sechs bzw. zehn Segmente mit einer jeweiligen Winkelüberdeckung von 60° bzw. 36° usw. gezählt werden können.

Eine solche "Feinauflösung" des Vollkreises mag zunächst als nicht sehr hoch erscheinen, doch ist zu beachten, dass es sich dabei um den vom zweiten Zahnrad durchlaufenen Vollkreis handelt. Bildet man das Getriebe der Sensorbaugruppe mit einem Übersetzungsverhältnis u > 1 aus, so dass sich das zweite Zahnrad je Volldrehung des Eingangszahnrades u mal dreht, so erhöht sich die Anzahl der zählbaren Segmente einer Volldrehung der Antriebswelle um den Faktor u, so dass sich bei einem Übersetzungsverhältnis von 1:36 und fünf Permanentmagneten eine Feinauflösung des Antriebswellen-Vollkreises von 1° ergibt.

Gemäß der Erfindung ist die Elektronikschaltung der Sensorbaugruppe so ausgebildet, dass sie bei Ausfall der äußere Energieversorgung mit Hilfe der immer noch zur Verfügung stehenden, in den elektrischen Impulsen der Segmentzähler-Sensoranordnung enthaltenen elektrischen Energie, diese Impulse zumindest vorzeichenrichtig zählen und den jeweils erreichten Zählwert in einem nicht flüchtigen Speicher speichern kann. Dies ist auch dann möglich, wenn die Drehbewegung der Antriebswelle, aus deren kinetischer Energie die für den Betrieb der Elektronikschaltung erforderliche elektrische Energie gewonnen wird, beliebig langsam verläuft.

Steht die äußere Energieversorgung dann wieder zur Verfügung kann aus dem erreichten Zählwert unter Berücksichtigung des Übersetzungsverhältnisse und der Winkelgröße der gezählten Segmente die momentane Winkelstellung der Antriebswelle berechnet werden. Bei Verwendung von elektronischen Bausteinen, insbesondere integrierten Schaltungen mit extrem geringem Energieverbrauch ist es denkbar, auch die Berechnungsvorgänge mit Hilfe der aus den Zählimpulsen gewonnen elektrischen Energie durchzuführen, sodass eine von einer äußeren Energieversorgung (einschließlich Batterie) völlig unabhängige Sensorbaugruppe geschaffen wird, die ihren gesamten, aber geringen Energiebedarf aus der kinetischen Energie der sich drehenden Antriebswelle deckt.

In besonders bevorzugter Weise ist die Sensorbaugruppe dadurch als absoluter Multiturn ausgebildet, dass zusätzlich zur Singleturn-Funktion des Segmentzählers seine Elektronikschaltung die elektrischen Impulse der Segmentzähler-Sensoranordnung über beliebig viele Umdrehungen hinweg fortlaufend je nach Drehrichtung zum vorhandenen, in der Elektronikschaltung gespeicherten Zählwert addieren oder von ihm subtrahieren und dann den neuen Zählwert speichern kann. Für mehrere, in der gleichen Richtung erfolgende volle Umdrehungen der Antriebswelle ergeben sich wegen der oben erläuterten Feinauflösung und Drehzahlübersetzung im Allgemeinen sehr große Zählwerte. Dies bedeutet jedoch keinerlei Nachteil, weil gemäß der Erfindung ein elektronischer Zähler und ein nichtflüchtiger elektronischer Speicher verwendet werden, deren Zähl- bzw. Speicherkapazität ohne wesentlichen Aufwand vergrößert werden kann. Es gibt somit keine konstruktive Begrenzung des maximalen Zählwertes und es ist eine einfache, zu keinen nennenswerten Mehrkosten führende, die Baugröße praktisch nicht beeinflussende Anpassung an jeden beliebigen Anwendungsfall möglich. Mit der Übersetzung erhöhen sich also je nach Größe des Spiels des Getriebes in besonders vorteilhafter Weise die erzielbare Auflösung und Genauigkeit der Winkelstellung der Antriebswelle.

Für den Fall, dass die mit Hilfe des Segmentzählers erzielbare Feinauflösung nicht ausreichend ist, ist vorzugsweise vorgesehen, dass die Sensorbaugruppe zusätzlich zum Segmentzähler einen absoluten Singleturn aufweist, dessen Singleturn-Erregeranordnung auf dem gleichen zweiten Zahnrad montiert ist wie die des Segmentzählers. Weiterhin ist eine feststehende Singleturn-Sensoranordnung vorgesehen, welche aufgrund der Drehbewegung der Singleturn-Erregeranordnung elektrische Signale erzeugt, die von der Elektronikschaltung zur Berechnung der momentanen Winkelstellung der Antriebswelle zusammen mit den Zählwerten des Segmentzählers verwendet werden, wobei wiederum das Übersetzungsverhältnis des einstufigen Getriebes berücksichtigt wird.

Es ist bevorzugt, dass es sich bei der Singleturn-Erregeranordnung um wenigstens einen Permanentmagneten handelt, dessen Magnetisierungsrichtung senkrecht zur Sensorachse der Sensorbaugruppe verläuft. Dann kann die Singleturn-Sensoranordnung von einem der Erregeranordnung auf dieser Sensorachse axial direkt gegenüberliegenden Bauelement, beispielsweise einer Mehrfeld-Hall-Sonde gebildet werden, die sich durch eine äußerst geringe Größe, geringe Kosten und eine hohe Zuverlässigkeit auszeichnet und dabei ohne weiteres eine Feinauflösung in der Größenordnung von 16 Bit liefert.

Ein zusätzlicher Vorteil liegt darin, dass sich die Feinauflösung im Verhältnis der Drehzahlübersetzung des Getriebes verbessert. Es können also vergleichsweise einfache und damit kostengünstige Bauelemente für die Singleturn-Sensoranordnung, beispielsweise eine einfache 4-Quadranten-Hallsonde verwendet werden, die dann gleichzeitig die Funktion des zusätzlichen Sensorelementes des Segmentzählers übernimmt, wodurch ein Bauteil eingespart wird.

Durch die erfindungsgemäße Kombination eines Singleturns mit einem Segmentzähler wird das bei Verwendung eines Übersetzungsgetriebes auftretende Problem der Unbestimmtheit des vom Singleturn fein aufgelösten Segments (Halb-, Drittel-, Viertel-Kreises usw.) gelöst, weil die Zähl- und Auswerteelektronik mit Hilfe des vom Segmentzähler ausgehend von einem bekannten Startpunkt ermittelten Segment-Zählwertes immer berechnen kann, welches Segment durch den Singleturn gerade fein aufgelöst wird.

Damit der Singleturn bei hohem Auflösungsvermögen auch eine hohe Genauigkeit erzielt ist bevorzugt, für einen spielfreien Eingriff des zweiten Zahnrads in das Eingangszahnrad zu sorgen. In dieser Hinsicht ist es bevorzugt, das zweite Zahnrad in zwei koaxial zueinander angeordnete Teilzahnräder mit gleicher Zähnezahl aufzuspalten. Bei gerader Verzahnung (, die dann auch beim Eingangszahnrad gegeben ist) sind beide Teilzahnräder axial unverschiebbar mit einem axialen Abstand zueinander angeordnet. In dem so gebildeten Zwischenraum befindet sich eine Spiralfeder, die das eine der beiden Teilzahnräder, das frei drehbar auf der Sensorwelle gelagert ist, gegen das andre, drehfest mit der Sensorwelle verbundene Teilzahnrad in Drehrichtung vorspannt. Zwar muss diese Spiralfeder bei der ihrer Vorspannkraft entgegen gesetzten Drehrichtung das Trägheitsmoment der Erregeranordnung aufnehmen, doch ist dies wegen deren geringer Masse ohne Probleme möglich. Wird eine Schrägverzahnung sowohl des Eingangszahnrades als auch der beiden Teilzahnräder gewählt, so werden beide drehstarr mit der Sensorwelle verbunden. Das erste der beiden Teilzahnräder ist außerdem axial unverschieblich, während das andere gegen das erste axial verschieblich ist und von diesem durch eine zwischen ihnen angeordnete Tellerfeder weggedrückt wird, so dass es aufgrund der Schrägverzahnung zu eine die Spielfreiheit gewährleistenden Verspannung mit dem Eingangszahnrad kommt.

Weisen der Singleturn und der Segmentzähler eine gemeinsame Erregeranordnung, beispielsweise einen Permanentmagneten auf, dessen Magnetisierungsrichtung senkrecht zur Sensorachse des zweiten Zahnrades verläuft, so können die beiden Sensoranordnungen (beispielsweise eine 4-Quadranten-Hallsonde des Singleturns und ein Wiegand-Draht mit aufgewickelter Induktionsspule des Segmentzählers) entweder in zwei zueinander parallelen, zur Drehachse senkrecht verlaufenden Ebenen angeordnet sein, oder sie können in einer einzigen Ebene liegen wobei dann vorzugsweise sämtliche Bauelemente der beiden Sensoranordnungen in einem einzigen Halbleiterchip integriert und/oder zusammengefasst sind. Dieser Halbleiterchip kann auch die Elektronikschaltung und einen µ-Controller enthalten.

Vorzugsweise weist eine erfindungsgemäße Sensorbaugruppe, die sowohl einen Segmentzähler als auch einen gesonderten Singleturn umfasst, nur eine einzige magnetische Erregeranordnung auf, die sowohl mit der Sensoranordnung des Segmentzählers als auch mit der des Singleturns zusammenwirkt.

Ein erfindungsgemäßer Drehgeber weist vorzugsweise eine Sensorbaugruppe der bisher erläuterten Art auf. Er zeichnet sich durch eine sehr kleine Baugröße aus. Vorzugsweise umfasst er eine in seinem Gehäuse drehbar gelagerte Hülse, welcher das mit ihr drehfest verbundene Eingangszahnrad konzentrisch trägt. In diese Hülse kann dann die Antriebswelle von außen her für eine drehfeste Verbindung eingeführt werden. Für Hohlwellenanordnungen, bei denen die beiden Enden der Antriebswelle frei sein müssen weil z.B. das eine von einem Motor angetrieben wird, während das andere irgend eine weitere Einheit antreibt oder durch eine Bremse belegt ist. kann die Hülse an beiden Enden offen sein, sodass die Antriebswelle durch sie so hindurch gesteckt werden kann, dass sie auf der der Eintrittsseite des Gehäuses gegenüberliegenden Seite aus einer dort vorgesehenen weiteren Gehäuseöffnung herausragt.

Weiterhin kann ein erfindungsgemäßer Drehgeber auch mehr als eine der oben beschriebenen Sensorbaugruppen umfassen. In diesem Fall weist das Getriebe mehrere zweite Zahnräder auf, deren Sensorachsen nicht zusammenfallen. Jede dieser Sensorbaugruppen kann sowohl einen Segmentzähler als auch einen Singleturn umfassen, oder eine von ihnen weist Singleturn auf und die andere einen Segmentzähler. Die im erstgenannten Fall vorhandene Redundanz kann z.B. aus Sicherheitsgründen erforderlich sein. Im zweiten Fall findet eine Aufgabenteilung zwischen den beiden zweiten Sensorbaugruppen statt. Ein besonderer Vorteil dieser Anordnung besteht darin, dass in beiden zweiten Sensorbaugruppen jeweils eine optimale Ausgestaltung der Erreger-Sensorgeometrie erfolgen kann. In beiden Fällen ist es zwar möglich aber nicht zwingend erforderlich, dass alle zweiten Zahnräder bezüglich des Eingangszahnrades das gleiche Drehzahl-Übersetzungsverhältnis aufweisen. Für die Erfüllung der Funktion eines erfindungsgemäßen Drehgebers ist es jedoch ausreichend, wenn er nur eine einzige Sensorbaugruppe umfasst.

Diese und andere vorteilhafte Ausgestaltungen und Weiterbildungen der erfindungsgemäßen Winkelmesseinheit sind in den Unteransprüchen niedergelegt.

Die Erfindung wird im Folgenden anhand von Ausführungsbeispielen unter Bezugnahme auf die Zeichnung beschrieben; in dieser zeigen:
- Fig. 1: einen Axialschnitt durch eine erste Ausführungsform eines auf ein freies Ende einer Antriebswelle aufgesteckten erfindungsgemäßen Drehgebers, der asymmetrisch ausgebildet und mit einer als Segmentzähler aufgebauten Sensorbaugruppe ausgestattet ist,
- Fig. 2: einen Axialschnitt durch eine weitere Ausführungsform eines erfindungsgemäßen Drehgebers, der symmetrisch ausgebildet und mit einer sowohl einen Segmentzähler als auch einen Singleturn umfassenden Sensorbaugruppe ausgestattet ist, wobei sich die Antriebswelle vollständig durch das Gehäuse des Drehgebers hindurch erstreckt,
- Fig. 3: einen Axialschnitt durch dritte Ausführungsform eines erfindungsgemäßen Drehgebers, bei dem sowohl das Getriebe als auch die Sensorbaugruppe einen anderen Aufbau als beim Ausführungsbeispiel in Figur 2 besitzen,
- Fig. 4: einen Axialschnitt durch eine vierte Ausführungsform eines erfindungsgemäßen Drehgebers mit zwei Sensorbaugruppen, von denen die eine einen Singleturn mit einem geteilten zweiten Zahnrad und die andere einen Segmentzähler umfasst, und
- Fig. 5: einen Axialschnitt durch eine fünfte Ausführungsform eines erfindungsgemäßen Drehgebers, mit einer sowohl einen Segmentzähler als auch einen Singleturn umfassenden Sensorbaugruppe, bei der die beiden Sensoranordnungen in einer einzigen Ebene liegen.

In den Figuren sind einander gleiche bzw. entsprechende Teile mit den gleichen Bezugszeichen bezeichnet.

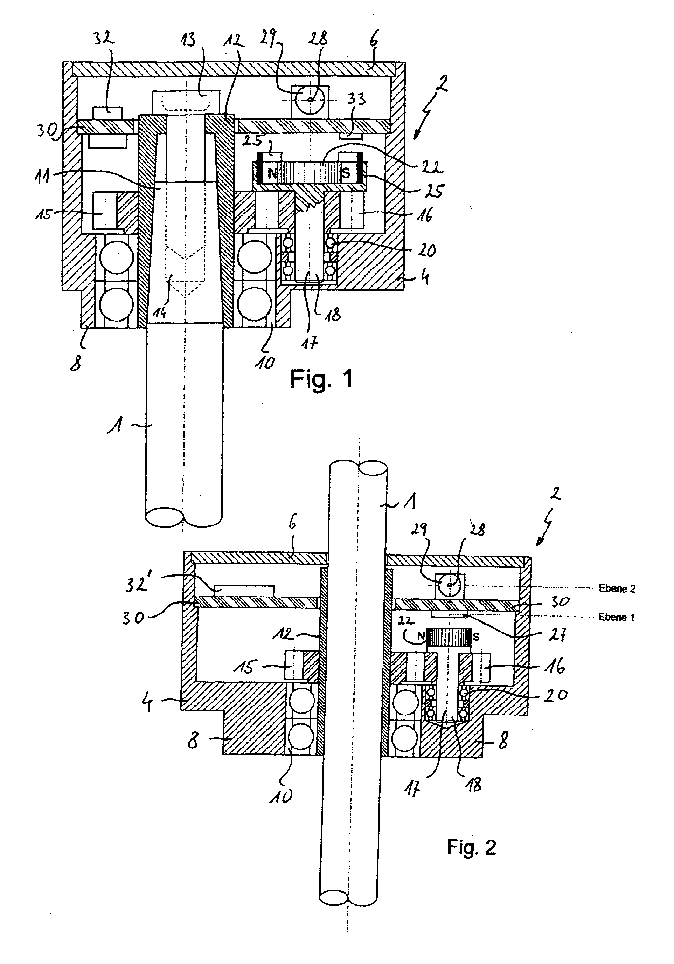

Figur 1 zeigt eine Antriebswelle 1, deren Umdrehungen mit Hilfe eines Drehgebers 2 erfasst werden sollen.

Der Drehgeber 2 besitzt ein zur Abschirmung gegen äußere Magnetfelder vorzugsweise aus ferromagnetischem Material bestehendes Gehäuse 4, das im Wesentlichen die Form eines Hohlzylinders aufweist, dessen in den Figuren oberes Ende durch einen vorzugsweise aus elektrisch leitendem Material bestehenden Deckel 6 verschlossen ist. An seinem gegenüberliegenden Ende besitzt das Gehäuse 4 einen vorspringenden Flansch 8 mit einer durchgehenden Bohrung zur Aufnahme eines Lagers 10, mit dessen Hilfe das Gehäuse 4 an der Antriebswelle 1 gelagert ist. Durch einen (nicht dargestellten) Anschlag wird es daran gehindert, sich mit der Antriebswelle 1 mitzudrehen.

Bei dem in Figur 1 gezeigten Ausführungsbeispiel ist das obere Ende 11 der Welle 1 in eine an ihrem oberen Ende durch einen Boden verschlossene, eine Hohlwelle 12 eingeführt. Dieser Boden weist eine Bohrung auf, durch die hindurch sich eine Schraube 13 erstreckt, die in das Innengewinde eines im Ende 11 der Welle 1 zentrisch ausgebildeten Sacklochs 14 eingeschraubt ist, um die Hohlwelle 12 drehfest mit der Welle 1 zu verbinden.

Weiterhin umfasst der Drehgeber 2 eine im Inneren seines Gehäuses 4 angeordnetes, mechanisches einstufiges Getriebe, das im vorliegenden Fall aus zwei Zahnrädern 15, 16 besteht, von denen das größere Eingangszahnrad 15 zur Hohlwelle 12 konzentrisch angeordnet und mit dieser drehfest verbunden ist.

Das kleinere, zweite Zahnrad 16, das in etwa den halben Durchmesser des Eingangszahnrades 15 besitzt, ist drehfest mit einer sich parallel zur Antriebswelle 1 erstreckenden Sensorwelle 18 verbunden, die im Gehäuse 4 mit Hilfe von Lagern 20 drehbar gelagert ist, sodass sich das zweite Zahnrad 16 um seine geometrische Drehachse 17 drehen kann.

An ihrem freien, oberen Ende trägt die Sensorwelle 18 einen scheibenförmigen, diametral magnetisierten Permanentmagneten 22, dessen Nord- und Süd-Polachse senkrecht zur Drehachse 17 der Sensorwelle 18 so verläuft, dass die beiden Pole von der Drehachse 17 gleiche Abstände aufweisen. Der Permanentmagnet 22 ist konzentrisch von zwei blechförmigen, gemeinsam mit ihm rotierenden ferromagnetischen Flussleitkörpern 25, 25 umgeben, die jeweils die Form eines sich über einen Winkel von ca. 90° des zur Drehachse 17 konzentrischen Vollkreises erstreckenden Hohlzylindersegments mit geringer axialer Höhe aufweisen. Diese Flussleitkörper 25, 25 lenken die zunächst aus dem Permanentmagneten 22 in etwa horizontal austretenden magnetischen Feldlinien nach oben hin so um, dass die sich schließenden Feldlinien einerseits einen Wiegand-Draht 28, der sich senkrecht zur Zeichenebene der Figur 1 erstreckt und auf den eine Induktionsspule 29 aufgewickelt ist, und andererseits ein zusätzliches Sensorelement 33 durchsetzen, dessen Ausgangssignal gemäß der DE 102 59 223 B3 gemeinsam mit den von der Induktionsspule 29 gelieferten Signalen ein vorzeichenrichtiges Zählen der Segmente ermöglicht..

Die Flussleitkörper 25, 25 ermöglichen es, die radialen Abstände zwischen den Polen des Permanentmagneten 22 und dem aus ferromagnetischem Material bestehenden Gehäuse 4 klein zu hallten, ohne dass ein magnetischer Kurzschluss erfolgt. Besteht das Gehäuse 4 aus elektrisch leitendem Material vermeiden die Flussleitkörper 25, 25 die Erzeugung von Wirbelströmen auch dann, wenn sich der Permanentmagnet 22 mit hoher Drehzahl dreht.

Eine sich horizontal durch das Gehäuse 4 erstreckende, aus Kunststoff bestehende Platine 30 trägt den Wiegand-Draht 28 mit der auf ihn aufgewickelter Induktionsspule 29. Die Platine 30 kann ein- oder beidseitig Leitbahnen aufweisen, die zur Stromversorgung der Sensorbauelemente sowie dazu dienen, die Signalanschlüsse der Induktionsspule 29 mit einer symbolisch angedeuteten, vorzugsweise als integrierter Schaltkreis bzw. Chip ausgebildeten Elektronikschaltung 32 und das zusätzliche Sensorelement 33 zu verbinden, die über (nicht dargestellte) Anschlussleitungen, die aus dem Gehäuse 4 herausgeführt sind, die vom Drehgeber 2 erzeugten Zählwerte an einen Verwender weitergibt. Das zusätzliche Sensorelement 33 ist hier eine Hall-Sonde, kann aber auch eine Feldplatte oder ein ähnliches magnetfeldempfindliches Element sein.

Das zweite Zahnrad 16, der mit ihm drehfest verbundene Permanentmagnet 22, die Flussleitkörper 25, 25, der Wiegand-Draht 28, die Induktionsspule 29, die Elektronikschaltung 32 und das zusätzliche Sensorelement 33 bilden hier eine Sensorbaugruppe die als autonomer Segmentzähler ausgebildet ist.

Da das Getriebe ein Übersetzungsverhältnis von 1:2 besitzt, sich also das zweite Zahnrad 16 doppelt so oft dreht, wie das Eingangszahnrad 15, liefert der autonome Segmentzähler für jede volle Umdrehung der Welle 1 vier Zählimpulse. Die Elektronikschaltung 32 enthält einen entsprechenden Zähler, dessen Zählkapazität so gut wie keinen größen- oder kostenmäßigen Einschränkungen unterliegt, so dass es für jeden Anwendungsfall möglich ist, sie so groß zu wählen, dass es mit Sicherheit nicht zu einem Überlauf des Multiturn-Zählers kommt.

Ein mit einem rotierenden Permanentmagneten, einem Wiegand-Draht und einer Induktionsspule arbeitender, absoluter Segmentzähler ist beispielsweise der DE 102 59 223 B3 zu entnehmen, auf die hinsichtlich der Einzelheiten verwiesen wird. Allerdings sei ausdrücklich betont, dass in Verbindung mit dem erfindungsgemäßen Drehgeber 2 auch andere Ausführungsformen von absoluten Segmentzählern verwendet werden können. Wesentlich ist lediglich, dass der Segmentzähler aus kleinen, kostengünstigen Bauteilen besteht und in der Lage ist, die für die Erzeugung von Zählimpulsen und deren Erfassung und Zwischenspeicherung erforderliche elektrische Energie aus der Drehbewegung der Antriebswelle 1 abzuleiten, so dass er auch dann einwandfrei zählen kann, wenn keinerlei Stromversorgung aus einem Netz, einer Batterie oder dergleichen erfolgt.

Zwar ist es prinzipiell möglich, das Übersetzungsverhältnis des Getriebes exakt 1:2, 1:3, 1:4, usw. zu wählen. Um jedoch die Abnützung der Zahnräder 15, 16 möglichst gering zu halten, ist bevorzugt, für die Anzahl der Zähne der beiden Zahnräder 15, 16 zwei Primzahlen zu wählen, deren Produkt möglichst groß ist, so dass erst nach einer diesem Produkt entsprechenden Anzahl von Umdrehungen wieder die gleichen Zähne der Zahnräder 15, 16 ineinander greifen. An den oben gemachten Aussagen hinsichtlich der Arbeitsweise des Segmentzählers ändert sich hierdurch prinzipiell nichts. Es ist lediglich ein etwas höherer Rechenaufwand erforderlich, der aber von der Elektronikschaltung 32 zumindest in den Zeiträumen ohne weiteres geleistet werden kann, in denen sie mit einer externen oder von einer Batterie kommenden Stromversorgung in Verbindung steht.

Der in Figur 2 dargestellte Drehgeber unterscheidet sich von dem aus Figur 1 in drei Punkten:
a) Die Hohlwelle 12, die das Eingangszahnrad 15 drehfest trägt, ist durchgehend offen, so dass die Antriebswelle 1 durch sie hindurch geschoben werden kann. Der Deckel 6 weist eine entsprechende Durchgangsöffnung auf. Diese Anordnung hat den Vorteil, dass ein solcher Hohlwellen-Drehgeber auch dann eingesetzt werden kann, wenn das Ende der Antriebswelle 1, das dem von einem Motor angetriebenen Ende gegenüberliegt, mit einer weiteren Einheit verbunden werden muss, bei der es sich beispielsweise um eine Bremse oder eine anzutreibende Maschine oder dergleichen handelt.
b) Die ferromagnetischen Flussleitkörper 25, 25 sind weggelassen, die bei der Variante nach Figur 1 zu einer besseren Führung der Magnetfeldlinien des Permanentmagneten 22 dienen. Diese Flussleitkörper 25, 25 können jedoch auch bei dem Ausführungsbeispiel nach Figur 2 zum Einsatz kommen. Umgekehrt ist es prinzipiell auch möglich, sie bei dem Ausführungsbeispiel nach Figur 1 wegzulassen. Um dann die Gefahren eine magnetischen Kurzschlusses bzw. einer Wirbelstromerzeugung zu vermeiden, sollte das Gehäuse 4 dann aus einem nicht ferromagnetischen bzw. einem elektrisch nicht leitenden Material bestehen. Ein Solcher Drehgeber ist für Einsatzbedingungen geeignet, bei denen keine Störung durch äußere Magnetfelder auftreten kann, beispielsweise wenn ohnehin eine den Drehgeber umschließende Magnetfeldabschirmung vorhanden ist.
c) Der wesentlichste Unterschied ist jedoch, dass die hier gezeigte Sensorbaugruppe zusätzlich zum Segmentzähler zur verbesserten Feinauflösung der 360° Volldrehung der Sensorwelle 18 einen Singleturn umfasst, dessen Singleturn-Erregeranordnung ebenfalls vom Permanentmagneten 22 gebildet wird, d.h. mit der des Segmentzählers identisch ist, und der weiterhin als Singleturn-Sensoranordnung eine von der Platine 30 auf ihrer Unterseite getragene, vorzugsweise vier Quadranten umfassende Hallsonde 27 sowie eine erweiterte Verarbeitungselektronik 32' aufweist, die nicht nur zur zählenden Erfassung der von der Segmentzähler-Sensoranordnung gelieferten Zählimpulse sondern auch zur Auswertung der von der Hallsonde 27 kommenden Signale sowie zur Berechnung der momentanen Winkelstellung der Antriebswelle 1 ausgebildet ist. Das zusätzliche Sensorelement 33 kann hier entfallen.

Auch der vom Permanentmagneten 22 und der Hall-Sonde 27 gebildete Singleturn ist aus dem Stand der Technik bekannt und bedarf daher keiner weiteren Beschreibung. Wegen des oben bereits erwähnten Übersetzungsverhältnisses des Getriebes dreht sich die Singleturn-Erregeranordnung um 360° wenn sich die Antriebswelle 1 um 180° dreht , d.h. der Singleturn liefert für die zweite Halbdrehung der Antriebswelle 1 die gleichen Ausgangssignale wie für die erste. Eine Kombination der von ihm gelieferten Signale mit den Zählwerten des Segmentzählers ermöglicht es jedoch, jederzeit exakt zu bestimmen, welche Hälfte des 360° betragenden Vollkreises von der Welle 1 gerade durchlaufen wird. Ein besonderer Vorteil dieser Anordnung besteht darin, dass sich das Auflösungsvermögen entsprechend dem Übersetzungsverhältnis des Getriebes erhöht

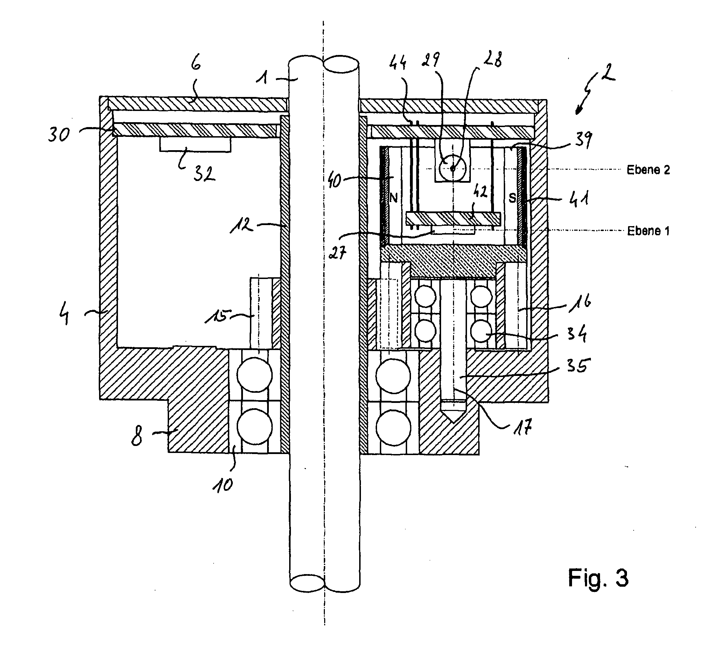

Auch bei der in Figur 3 gezeigten Ausführungsform eines erfindungsgemäßen Drehgebers erstreckt sich die Antriebswelle 1 vollständig durch das Gehäuse 4 hindurch, so dass ihr abtriebsseitiges Ende mit einer weiteren Einheit gekoppelt werden kann.

Ein erster Unterschied zu den vorausgehenden Ausführungsbeispielen besteht darin, dass hier die beiden Zahnräder 15, 16 den gleichen Durchmesser aufweisen, sich das zweite Zahnrad 16 also mit der gleichen Geschwindigkeit dreht wie das Eingangszahnrad 15 und damit auch wie die Welle 1.

Weiterhin ist das Zahnrad 16 mit Hilfe eines Lagers 34 frei drehbar auf einer fest mit dem Gehäuse 4 verbundenen Achse 35 montiert. Das zweite Zahnrad 16 trägt auf seiner in der Figur 3 oben liegenden Stirnseite eine Permanentmagnet-Anordnung, die von zwei Permanentmagneten 39, 40 in Form vertikal stehender Hohlzylindersegmente gebildet wird, von denen sich jedes bis zu einem Winkel von maximal 180°, vorzugsweise jedoch von 90° des zur Achse 35 konzentrischen Vollkreises erstreckt, und die auf ihrer Außenseite von einem einen Rückschlusskörper bildenden, vollständigen Hohlzylinder 41 aus ferromagnetischem Material umgeben sind, der einen sehr kleinen Abstand der Permanentmagnete 39, 40 vom ferromagnetischen Gehäuse 4 ermöglicht, ohne dass die Gefahr eines magnetischen Kurzschlusses besteht. Die Polaritäten der beiden Permanentmagnete 39, 40 sind einander entgegengesetzt, d.h. der Nord-Pol des einen Permanentmagneten 39 liegt im Inneren des umschlossenen Hohlzylinderraums, während der Nord-Pol des anderen Permanentmagneten 40 auf der Außenseite liegt.

Mit dieser Anordnung ergibt sich im Inneren des so gebildeten Hohlzylinderraums zumindest in dem Bereich, in welchem sich die Hall-Sonde 27 befindet, ein sehr gleichförmiges Magnetfeld, so dass die Hall-Sonde 27 als Singleturn mit hohem Auflösungsvermögen arbeiten kann. Um die Hall-Sonde 27 in diesen Bereich zu bringen, ist sie auf einer eigenen Platine 42 montiert, die über nach unten ragende Halter 44 an der Platine 30 befestigt ist. Auch sind der Wiegand-Draht 28 und die ihn umgebende Induktionsspule 29 so auf der Unterseite der Platine 30 montiert, dass sie in das Innere des von dem Magnetfeld erfüllten Hohlzylinderraums hineinragen. Das zusätzliche Sensorelement 33 kann hier ebenfalls entfallen.

Auch bei diesem Ausführungsbeispiel ist also eine Sensorbaugruppe vorhanden, die sowohl einen Segmentzähler als auch einen hoch fein auflösenden Singleturn umfasst.

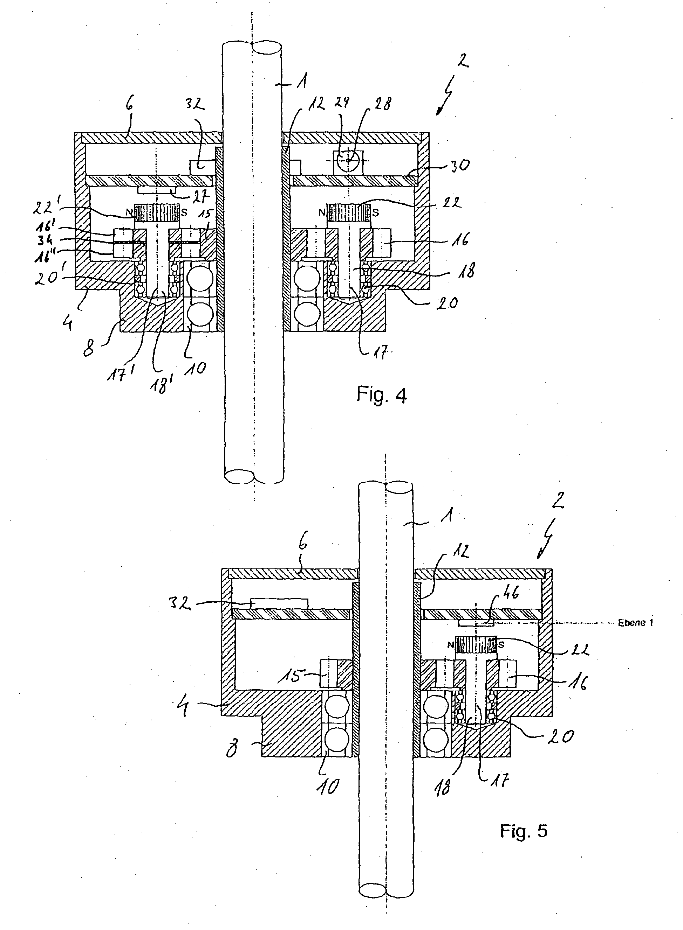

Fig. 4 zeigt einen Drehgeber 2, der sich von den vorausgehend beschriebenen dadurch unterscheidet, dass zwei Sensorbaugruppen mit zwei zweiten Zahnrädern 16 und 16', 16" vorhanden sind, von denen jedes mit dem Eingangszahnrad 15 in Eingriff steht und mit einer Welle 18 bzw. 18' fest verbunden ist, die mit Hilfe von Lagern 20 bzw. 20' im Flansch 8 drehbar gelagert ist, wobei das zweite Zahnrad des auf der linken Seite der Fig. 4 dargestellten Singleturns in zwei Teilzahnräder 16', 16" mit einer dazwischen eingefügten Tellerfeder 34 unterteilt ist, um in der oben beschriebenen Weise Spielfreiheit zu erzielen.

Sowohl das zweite Zahnrad 16, als auch das Teilzahnrad 16' trägt jeweils einen Permanentmagneten 22 bzw. 22', von denen der Permanentmagnet 22 der in Fig. 4 rechts dargestellten Sensorbaugruppe als Erregeranordnung für einen Segmentzähler mit Wiegand-Draht 28 und Induktionsspule 19 und der Permanentmagnet 22' auf der linken Seite gezeigten Sensorbaugruppe als Erregeranordnung für einen Singleturn mit einer Hallsonde 27 dient. Die zweiten Zahnräder 16 und 16', 16" besitzen bei dem gezeigten Ausführungsbeispiel die gleiche Anzahl von Zähnen. Bei einer solchen Ausbildung des Drehgebers eine getrennte Optimierung der jeweiligen Sensorbaugruppen-Geometrie möglich. Dabei können sowohl die Erreger- als auch die Sensoranordnungen unterschiedlich ausgebildet sein. Die Hallsonde 27 des Singleturns übernimmt auch hier die Aufgabe des zusätzlichen Sensorelementes 33 des Segmentzählers.

Zwei oder mehr identische Sensorbaugruppen, von denen beispielsweise jede sowohl einen Segmentzähler als auch einen Singleturn umfasst, kommen vorteilhafter Weise immer dann zum Einsatz, wenn aus Sicherheitsgründen Redundanz erforderlich ist. Wegen der bezüglich der Antriebswelle 1 radialsymmetrischen Form des Gehäuses 4 vergrößert sich die Baugröße dabei nicht.

Gewünschten Falls können die beiden zweiten Zahnräder 16, 16' auch unterschiedliche Zähnezahlen aufweisen.

Der in Fig. 5 dargestellte Drehgeber 2 entspricht dem Drehgeber aus Fig. 2 mit der Ausnahme, dass hier gemäß der Erfindung eine als integrierter Schaltungschip ausgebildete Sensoranordnung 46 vorgesehen ist, für die zwei verschiedene Ausführungsformen möglich sind
a) Es können in den Schaltungschip sowohl ein Wiegand-Draht mit Induktionsspule (Segmentzähler) als auch eine 4-Quadranten-Hallsonde (Singleturn) oder andere, eine entsprechende Funktion ausübende Bauelemente sowie die Elektronikschaltung und ein µ-Controller integriert sein.
b) Der integrierte Schaltungschip umfasst nur einen Wiegand-Draht mit Induktionsspule, das zusätzliche Sensorelement als Hall-Sonde sowie die Elektronikschaltung und einen µ-Controller. Wird dann statt eines Permanentmagneten 22 mit zwei Polen ein mehrpoliger Permanentmagnet verwendet, so dass pro Umdrehung des zweiten Zahnrades 16 beispielsweise sechs Zählimpulse erzeugt werden, dann ergeben sich bei einer Getriebeübersetzung von 1:12 je ganzer Umdrehung der Antriebswelle 1 zweiundsiebzig Zählimpulse, sodass nicht nur die entsprechenden Volldrehungen aus dem Segment-Zählwert berechnet werden können sondern auch eine Winkel-"Feinauflösung" in 5°-Schritten möglich ist.

Alternativ zu den dargestellten Ausführungsbeispielen ist auch möglich, ein Getriebe mit mehr als einer Stufe zu verwenden.

Aus Gründen einer entsprechend vorgegebenen Bauform kann es vorteilhaft sein, statt der gezeigten zylindrischen Zahnräder kegelige Zahnräder zu verwenden, so dass wenigstens eine der Sensorachsen senkrecht zur Antriebswelle steht.

## Patentansprüche

1. Sensorbaugruppe für einen Drehgeber, der zum Erfassen der Drehbewegungen einer Antriebswelle (1) in beiden Richtungen dient und ein einstufiges Getriebe mit einem Eingangszahnrad (15) aufweist, das zur Antriebswelle (1) konzentrisch angeordnet und mit dieser drehfest verbunden ist,
**dadurch gekennzeichnet,**
**dass** die Sensorbaugruppe (3) einen absoluten Segmentzähler umfasst, der zum Zählen der von der Antriebswelle (1) innerhalb einer jeden 360°-Drehung durchlaufenen Winkelsegmente dient und folgende Bestandteile aufweist:
- eine magnetische Segmentzähler-Erregeranordnung, die auf dem einen in das Eingangszahnrad (15) eingreifenden zweiten Zahnrad (16) des Getriebes drehfest montiert ist,
- eine feststehende, einen Wiegand- oder Impulsdraht (28) mit aufgewickelter Induktionsspule (29) und ein zusätzliches Sensorelement (33) umfassende Segmentzähler-Sensoranordnung, die immer dann, wenn die magnetische Segmentzähler-Erregeranordnung vorgegebene Winkelstellungen durchläuft, elektrische Impulse abgibt, und
- eine Elektronikschaltung (32), die diese elektrischen Impulse zählt, den jeweils erhaltenen Zählwert speichert und aus ihm unter Berücksichtigung des Übersetzungsverhältnisses des Getriebes die momentane Winkelstellung der Antriebswelle (1) berechnet.

2. Sensorbaugruppe nach Anspruch 1, **dadurch gekennzeichnet, dass** sie **dadurch** als absoluter Multiturn ausgebildet ist, dass die Elektronikschaltung (32) die elektrischen Impulse der Segmentzähler-Sensoranordnung über beliebig viele Umdrehungen der Antriebswelle (1) hinweg fortlaufend zählt und dabei je nach Drehrichtung zum vorhandenen, in der Elektronikschaltung (32) gespeicherten Zählwert addiert oder von ihm subtrahiert und dann wieder speichert.

3. Sensorbaugruppe nach Anspruch 1, **dadurch gekennzeichnet, dass** sie zusätzlich zu dem absoluten Segmentzähler einen absoluten Singleturn aufweist, der zur Feinauflösung von Winkelsegmenten, die von der Antriebswelle (1) durchlaufen werden, eine auf dem zweiten Zahnrad (16) drehfest montierte Singleturn-Erregeranordnung und eine feststehende Singleturn-Sensoranordnung aufweist, und dass die Elektronikschaltung (32) bei der Berechnung der momentanen Winkelstellung der Antriebswelle (1) sowohl den gespeicherten Zählwert des Segmentzählers als auch von der Singleturn-Sensoranordnung gelieferte Winkelmesssignale unter Berücksichtigung des Übersetzungsverhältnisses verwendet.

4. Sensorbaugruppe nach Anspruch 3, **dadurch gekennzeichnet, dass** der zusätzliche fein auflösende Singleturn auch als zusätzliches Sensorelement dient.

5. Sensorbaugruppe nach Anspruch 3 oder 4, **dadurch gekennzeichnet, das** zweite Zahnrad (16) für einen spielfreien Eingriff in das Eingangszahnrad (15) ausgebildet ist.

6. Sensorbaugruppe nach einem der Ansprüche 3 bis 5, **dadurch gekennzeichnet, dass** die Singleturn-Sensoranordnung und die Segmentzähler-Sensoranordnung in einer ersten bzw. einer zweiten Ebene angeordnet sind, wobei die beiden Ebenen zueinander parallel und senkrecht zur geometrischen Drehachse (17) des zweiten Zahnrades (16) verlaufen.

7. Sensorbaugruppe nach einem der Ansprüche 3 bis 5" **dadurch gekennzeichnet, dass** die Singleturn-Sensoranordnung und die Segmentzähler-Sensoranordnung in ein und derselben Ebene angeordnet sind.

8. Sensorbaugruppe nach einem der Ansprüche 3 bis 7, **dadurch gekennzeichnet dass** sowohl die Singleturn-Erregeranordnung als auch die Segmentzähler-Erregeranordnung wenigstens einen Permanentmagneten (22) umfasst, dessen Magnetisierungsrichtung senkrecht zu der geometrischen Drehachse (17) des zweiten Zahnrades (16) verläuft.

9. Sensorbaugruppe nach Anspruch 8, **dadurch gekennzeichnet dass** der wenigstens eine Permanentmagnet (22) konzentrisch zu der geometrischen Drehachse (17) des zweiten Zahnrades (16) angeordnet ist.

10. Sensorbaugruppe nach einem der Ansprüche 3 bis 9, **dadurch gekennzeichnet, dass** die Segmentzähler-Erregeranordnung mit der Singleturn-Erregeranordnung identisch ist.

11. Sensorbaugruppe nach einem der Ansprüche 8 bis 10, **dadurch gekennzeichnet dass** dem wenigstens einen Permanentmagneten (22) zwei ferromagnetische Flussleitstücke (25) zugeordnet sind.

12. Sensorbaugruppe nach einem der Ansprüche 3 bis 11, **dadurch gekennzeichnet, dass** die feststehende Singleturn-Sensoranordnung eine 4-Qudranten-Hallsonde (27) umfasst

13. Drehgeber, **dadurch gekennzeichnet, dass** er mindestens eine Sensorbaugruppe nach einem der vorhergehenden Ansprüche, umfasst.

14. Drehgeber, **dadurch gekennzeichnet, dass** er zwei Sensorbaugruppen umfasst, von denen eine erste nur einen Segmentzähler gemäß einem der Ansprüche 1, 2, 7, 8 oder10 bis 14 bildet, soweit diese einen Segmentzähler betreffen, während die zweite einen absoluten Singleturn bildet, der zur Feinauflösung von Winkelsegmenten, die von der Antriebswelle (1) durchlaufen werden, eine auf einem weiteren, mit dem Eingangszahnrad kämmenden zweiten Zahnrad (16') drehfest montierte Singleturn-Erregeranordnung und eine feststehende Singleturn-Sensoranordnung aufweist, und dass die Elektronikschaltung (32) bei der Berechnung der momentanen Winkelstellung der Antriebswelle (1) sowohl den gespeicherten Zählwert der ersten Sensorbaugruppe als auch von der zweiten Sensorbaugruppe gelieferte Winkelmesssignale unter Berücksichtigung des Übersetzungsverhältnisses verwendet.

15. Drehgeber nach Anspruch 13 oder 14, **dadurch gekennzeichnet, dass** zumindest eines der zweiten Zahnräder (16, 16') die gleiche oder eine kleinere Anzahl von Zähnen aufweist als das Eingangszahnrad(15).

16. Drehgeber nach einem der Ansprüche 13 bis 15, **dadurch gekennzeichnet, dass** das Eingangszahnrad (15) konzentrisch und drehfest auf einer Hohlwelle (12) montiert ist, in welche die Antriebswelle (1) für eine drehfeste Verbindung einführbar ist,

17. Drehgeber nach einem der Ansprüche 13 bis 16, **dadurch gekennzeichnet dass** die geometrische Drehachse (17, 17') wenigstens eines zweiten Zahnrades (16, 16') parallel zur Hohlwelle (12) verläuft.

18. Drehgeber nach einem der Ansprüche 13 bis 16, **dadurch gekennzeichnet dass** die geometrische Drehachse (17, 17') des wenigstens einen zweiten Zahnrades (16, 16') zur Hohlwelle (12) unter einem Winkel von vorzugsweise 90° verläuft.

19. Drehgeber nach einem der Ansprüche 13 bis 18, **dadurch gekennzeichnet, dass** die Zahlen der Zähne des Eingangszahnrades (15) und zumindest eines zweiten Zahnrades (16, 16') Primzahlen sind.

20. Drehgeber nach einem der Ansprüche 13 bis 18, **dadurch gekennzeichnet, dass** die Getriebeübersetzung der Gesetzmäßigkeit 2ⁿ folgt, wobei n eine ganze Zahl ≥ 0 ist.
